**Europäisches Patentamt**

**European Patent Office**

**Office européen des brevets**

(19)

(11) Veröffentlichungsnummer: **0 349 766**
**A2**

(12) # EUROPÄISCHE PATENTANMELDUNG

(21) Anmeldenummer: **89109985.5**

(22) Anmeldetag: **02.06.89**

(51) Int. Cl.⁴: **H04B 10/12**

(30) Priorität: **08.07.88 DE 3819445**

(43) Veröffentlichungstag der Anmeldung:
**10.01.90 Patentblatt 90/02**

(84) Benannte Vertragsstaaten:
**AT BE CH DE ES FR GB IT LI NL SE**

(71) Anmelder: **Standard Elektrik Lorenz**
**Aktiengesellschaft**
**Lorenzstrasse 10**
**D-7000 Stuttgart 40(DE)**

(72) Erfinder: **Fussgänger, Kurt, Dr.**
**Königsberger Strasse 1**
**D-7148 Remseck 2(DE)**
Erfinder: **Krimmel, Heinz G.**
**Dieterlestrasse 66**
**D-7000 Stuttgart 30(DE)**

(74) Vertreter: **Kugler, Hermann, Dipl.-Phys. et al**
**Standard Elektrik Lorenz AG Patent- und**
**Lizenzwesen Postfach 30 09 29**
**D-7000 Stuttgart 30(DE)**

(54) Optisches Nachrichtenübertragungssystem, insbesondere im Teilnehmeranschlussbereich.

(57) Ein optisches Nachrichtenübertragungssystem, bei dem mittels billiger optischer Sender und Empfänger eine Übertragung in einem einzigen Lichtwellenleiter-Modus durchgeführt wird, obwohl in dem Lichtwellenleiter (1) bei der Betriebswellenlänge mehrere Moden ausbreitungsfähig wären, ist gemäß der Erfindung durch Lichtwellenleiteranschlußstücke (2, 3) zwischen den Sendern (S, S1, S2) und Empfängern (E, E1, E2) und dem Lichtwellenleiter (1) ergänzt, die bei der Betriebswellenlänge "monomodig" sind und in die die optischen Steckverbindungen (4, 5) eingefügt sind. Steckverbindungen an der Übergangsstelle zwischen den Lichtwellenleiterstücken (2, 3) und dem Lichtwellenleiter (1) sind damit vermieden, wodurch Modenrauschen und Modendispersion infolge Modenkonversion nicht entstehen können.

FIG.1

## Optisches Nachrichtenübertragungssystem, insbesondere im Teilnehmeranschlußbereich

Die Erfindung betrifft ein optisches Nachrichtenübertragungssystem nach dem Oberbegriff des Patentanspruchs 1.

Ein derartiges System ist bekannt aus SPIE Vol. 841 Fiber Optic Networks & Coherent Technology in Fiber Optic Systems II (1987), Seiten 116 bis 123. Dieses System arbeitet mit billigen optischen Sendern und Empfängern, deren Betriebswellenlänge etwa bei 800 nm liegt und mit einem Monomode-Lichtwellenleiter, der aber erst oberhalb einer Grenzwellenlänge von 1300 nm "monomodig" ist. Trotzdem ist dafür gesorgt, daß die Übertragung nur im Grundmodus erfolgt.

Dies wird unter anderem durch Modenfilter erreicht, die die höheren Moden unterdrücken und die als Lichtwellenleiterstücke realisiert sind, die bei der Betriebswellenlänge der optischen Sender und Empfänger Monomode-Lichtwellenleiter sind. Das auf der Senderseite befindliche Lichtwellenleiterstück ist einerseits an den optischen Sender angekoppelt und andererseits entweder durch eine Steckverbindung mit dem die Übertragungsstrecke bildenden Lichtwellenleiter verbunden oder durch eine Schmelz-Spleißverbindung mit einem Lichtleiter-Zwischenstück ("jumper") verbunden. Das auf der Empfängerseite befindliche Lichtwellenleiterstück ("0,25 m 800 nm SM Fiber") ist einerseits mit dem die Übertragungsstrecke bildenden Lichtwellenleiter durch eine Schmelz-Spleißverbindung verbunden, andererseits jedoch nicht direkt an den Empfänger angekoppelt, sondern an ein an diesen angekoppeltes Multimode-Anschlußstück ("MM Pigtail") angespleißt. In dem zitierten Artikel ist weiterhin erwähnt, daß an Steckern und Spleißen sich der Grundmodus $LP_{01}$ teilweise in die nächsthöhere Modengruppe $LP_{11}$ umwandeln kann und dadurch unerwünschtes Modenrauschen sowie unerwünschte Modendispersion entstehen können. Andere Maßnahmen als das Filtern der höheren $LP_{11}$-Modengruppe sind zur Reduzierung dieses Modenrauschens und dieser Modendispersion nicht vorgeschlagen.

Es ist daher die Aufgabe der Erfindung, ein System der genannten Art anzugeben, das hinsichtlich des Modenrauschens und der Modendispersion gegenüber dem bekannten System verbessert ist.

Die Aufgabe wird wie im Patentanspruch 1 angegeben gelöst. Die Sendeeinrichtung für das neue System ist Gegenstand des Anspruchs 3, die Empfangseinrichtung Gegenstand des Anspruchs 5. Weiterbildungen ergeben sich aus den Unteransprüchen.

Die Erfindung wird nun anhand der Zeichnungen beispielsweise näher erläutert.

Es zeigen:

Fig. 1 das Grundprinzip des erfindungsgemäßen Übertragungssystems zur einseitig gerichteten Übertragung,

Fig. 2 ein bidirektionales System, bei dem die Übertragung in Frequenzgetrenntlage bei gleichen Wellenlängen erfolgt,

Fig. 3 ein bidirektionales System, bei dem die Übertragung in den verschiedenen Richtungen im Wellenlängenmultiplex erfolgt,

Fig. 4 ein doppelt bidirektionales System mit Wellenlängenmultiplex, und

Fig. 5 eine Abwandlung des Systems nach Fig. 4.

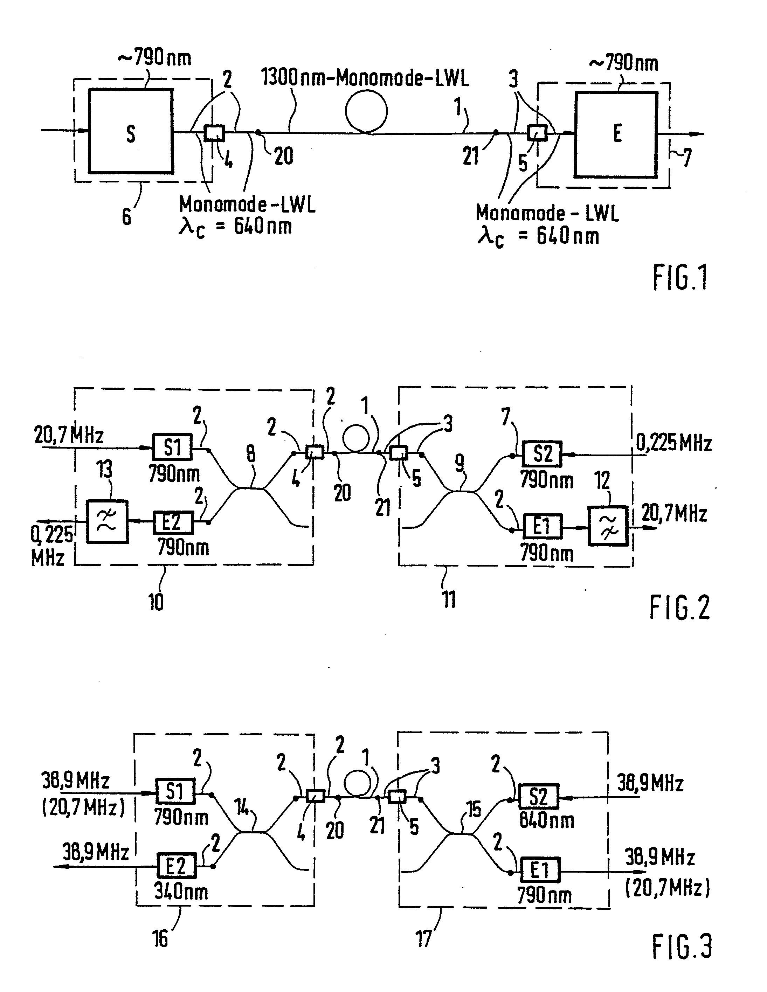

Wie das aus der eingangs genannten Druckschrift bekannte System oder auch das aus der EP-A-0 265 918 bekannte System hat auch das erfindungsgemäße System nach Figur 1 einen optischen Sender S und einen optischen Empfänger E mit einer Betriebswellenlange von etwa 790 nm und als Übertragungsmedium einen 1300 nm-Monomode-Lichtwellenleiter 1, dessen Grenzwellenlänge typischerweise zwischen 1100 nm und 1280 nm liegt. Es wird durch geeignete Maßnahmen dafür gesorgt, daß die Übertragung nur im Grundmodus erfolgt, obwohl bei der Betriebswellenlänge auch die höhere Modengruppe $LP_{11}$ im Lichtwellenleiter 1 ausbreitungsfähig wäre.

Erfindungsgemäß befindet sich auf der Senderseite zwischen dem optischen Sender S und dem Lichtwellenleiter 1 und auf der Empfängerseite zwischen diesem Lichtwellenleiter 1 und dem optischen Empfänger E ein Monomode-Lichtwellenleiterstück 2 bzw. 3, dessen Grenzwellenlänge beispielsweise 640 nm beträgt, das also bei der Betriebswellenlänge ein Monomode-Lichtwellenleiter ist. Die Grenzwellenlänge könnte auch bei 790 nm liegen, d.h. sie muß nur kleiner als die Betriebswellenlänge sein. Die Lichtwellenleiterstücke 2 und 3 sind einerseits an den Lichtwellenleiter 1 angespleißt und andererseits direkt an den optischen Sender S bzw. den optischen Empfänger E angekoppelt, und im Verlauf dieser Lichtwellenleiterstücke 2 und 3 sind optische Steckverbindungen 4 bzw. 5 eingefügt.

Die Spleißverbindungen sind Schmelz-Spleißverbindungen, die in sämtlichen Figuren mit den Bezugszeichen 20 und 21 bezeichnet sind.

Es ist bekannt, daß in der Nähe des Senders und in der Nähe des Empfängers aus Praktibilitätsgründen optische Steckverbindungen vorhanden sein müssen, jedoch befinden sich beim bekannten System diese Steckverbindungen nicht innerhalb der als Modenfilter dienenden Lichtwellenleiterstücke, sondern die Steckverbinder befinden sich an den Übergängen zwischen diesen Lichtwellenleiterstücken und dem das Übertragungsmedium bildenden Lichtwellenleiter.

Die erfindungsgemäße Anordnung der optischen Steckverbindung innerhalb des Monomode-Lichtwellenleiterstücks 2 oder 3 hat den Vorteil, daß in Übertragungsrichtung hinter der Steckverbindung der höhere Modus $LP_{11}$, der infolge Modenkonversion bekanntlich in jeder optischen Steckverbindung entstehen könnte, nicht auftreten kann, weil er in einem solchen Lichtwellenleiterstück nicht ausbreitungsfähig ist.

Würde die Steckverbindung wie bei dem bekannten System sich an der Übergangsstelle zwischen dem Lichtwellenleiterstück und dem Übertragungs-Lichtwellenleiter befinden, so würde dort eine $LP_{01}/LP_{11}$-Modenkonversion stattfinden und wegen des dadurch entstehenden Modenrauschens im Lichtwellenleiter 1 das Signal-Geräusch-Verhältnis um 1,4 dB verschlechtert werden, wie in einem Laborexperiment festgestellt wurde. Weiter wurde durch Messungen festgestellt, daß an Schmelz-Spleißverbindungen mmit kleinem Verlust (< 0,2 dB), die in Figur 1 jeweils durch Punkte gekennzeichnet sind, nur in unwesentlichem Umfang eine $LP_{01}/LP_{11}$-Modenkonversion auftritt.

Modenrauschen und Modendispersion infolge $LP_{01}/LP_{11}$-Modenkonversion sind bei dem erfindungsgemäßen System also weitgehend vermieden.

Als optischer Sender S wird wie bei dem bekannten System ein Halbleiterlaser mit einer Wellenlänge von 790 nm der für CD-Plattenspieler gebräuchlichen Art verwendet, der zu einem niedrigen Preis erhältlich ist.

Als optischer Empfänger E wird eine Fotodiode, basierend auf dem Material Si verwendet, die ebenfalls kostengünstig erhältlich ist.

Vorzugsweise wird als optischer Sender ein Laser mit mehreren, z.B. 12 bis 20 longitudinalen Moden verwendet. Diese 12 bis 20 longitudinalen in der Intensität sehr stabilen Lasermoden, deren Energie sich im Lichtwellenleiter als $LP_{01}$-Grundmodus ausbreitet, verursachen zwar einerseits ein Modenverteilungsrauschen infolge der Materialdispersion des Lichtwellenleiters, andererseits hat aber ein solcher multimodiger Laser den Vorteil, daß das Laser-Rückreflexionsrauschen und das sogenannte Laser-Mode-Hopping unterdrückt wird. Dies liegt daran, daß das Licht eines solchen Lasers eine geringe Kohärenzlänge hat und daher das auf den Laser zurückreflektierte Licht nicht mehr mit dem Laserlicht im Resonator interferieren kann. Besonders geeignet sind Multimode-Laser, deren Kohärenzlänge 1 mm oder weniger beträgt. Bei einem einmodigen entsprechenden Laser würde wegen dessen größerer Kohärenzlänge ein solcher unerwünschter Effekt auftreten. Es hat sich gezeigt, daß das Modenverteilungsrauschen und die Materialdispersion eher hingenommen werden können als Laser-Rückreflexionsrauschen und Laser-Mode-Hopping, so daß aus diesem Grunde dem Lasertyp mit mehreren longitudinalen Moden der Vorzug vor dem einmodigen Laser gegeben ist.

Sollen im Übertragungssystem weitere optische Steckverbindungen enthalten sein, z.B. innerhalb des Lichtwellenleiters 1, so sind diese nicht direkt in diesen Lichtwellenleiter 1 eingefügt, sondern in Lichtwellenleiterstücke derselben Art wie die Lichtwellenleiterstücke 2 und 3, wobei diese Lichtwellenleiterstücke dann in den Lichtwellenleiter 1 eingespleißt sind.

Das erfindungsgemäße System hat den Vorteil, daß es für kurze Übertragungsstrecken, wie sie für den Teilnehmer-Anschlußbereich typisch sind (In einem Analogsignale übertragenden Versuchssystem hatte der Lichtwellenleiter 1 eine Länge von 1,2 km und die Anschlußfasern Längen von 2m.) einen hohen Signal-Geräusch-Abstand gewährleistet. Dieser ist so gut, daß sogar die für eine analoge Übertragung bestehenden, im Vergleich zur digitalen Übertragung erheblich höheren Forderungen erfüllt werden können.

Beispielsweise sind Analogsignale aus mehreren breit-oder schmalbandigen Kanälen im Frequenzmultiplex durch Modulation verschiedener Hochfrequenzträger übertragbar, wobei als Modulationsverfahren eine Amplitudenmodulation, eine Frequenzmodulation oder eine Frequenzumtastung in Frage··kommen, zum Beispiel derart, daß ein (breitbandiges) analoges Fernsehsignal mit Ton auf einen HF-Träger mit der Frequenz 20,7 MHz oder 38,9 MHz durch Amplituden- oder Frequenzmodulation aufmoduliert wird und ein (schmalbandiges) analoges Fernsprechsignal einem HF-Träger mit der Frequenz 0,225 MHz ebenfalls durch eine dieser Modulationsarten aufmoduliert und mit dem Gemisch aus beiden modulierten HF-Trägern der Laser angesteuert wird. Empfangsseitig werden die beiden Signale dann durch elektrische Filterung wieder voneinander getrennt. Eine analoge Übertragung hat gegenüber der digitalen Übertragung den Vorteil, daß auf die aufwendigen Analog-Digital- und die entsprechenden Digital-Analog-Wandler verzichtet werden kann und daß die bereits heutzutage preisgünstig verfügbaren Signalverarbeitungseinrichtungen wie Filter, Modulatoren, Frequenzumsetzer usw. verwendet werden können.

In Verbindung mit der konventionellen Analog-Übertragungstechnik bietet das erfindungsgemäße optische Übertragungssystem die Möglichkeit einer äußerst kostengünstigen Nachrichtenübertragung im öffentlichen Teilnehmer-Anschlußbereich ebenso wie in teilnehmereigenen Netzen, den sogenannten "Local Area Networks" oder "Subscriber Premises Networks".

Zur praktischen Realisierung des Systems nach Figur 1 sei noch folgendes bemerkt: Der optische Sender S befindet sich mit der zugehörigen elektrischen Steuereinrichtung und den mechanischen Haltevorrichtungen, beides nicht gezeigt, in einem Gehäuse 6, in dessen Gehäusewand der zum Sender S hinführende Teil der Steckverbindung 4 befestigt ist. Der eine Teil des Lichtwellenleiterstücks 2 befindet sich also innerhalb und der andere Teil außerhalb des Gehäuses. Dieser außerhalb des Gehäuses befindliche Teil endet einerseits in dem in den Gehäuse-Teil der Steckverbindung 4 einsteckbaren Teil, und an seinem anderen Ende ist er an den das Übertragungsmedium bildenden Lichtwellenleiter 1 an einem durch einen Punkt in der Zeichnung angedeuteten Schmelzspleiß angespleißt. Entsprechendes gilt für den optischen Empfänger E, dessen Gehäuse mit dem Bezugszeichen 7 bezeichnet ist.

Anhand von Figur 2 wird nun ein bidirektionales Übertragungssystem beschrieben, das auch auf dem vorstehend erläuterten Prinzip der Erfindung beruht. In diesem Beispiel ist an den das Übertragungsmedium bildenden Lichtwellenleiter 1 einerseits eine erste optische Sende-Empfangseinrichtung, die sich in einem Gehäuse 10 befindet, und andererseits eine zweite optische Sende-Empfangseinrichtung, die sich in einem Gehäuse 11 befindet, angeschlossen. Die erste optische Sende-Empfangseinrichtung, in der Figur links dargestellt, enthält einen optischen Sender S1 und einen optischen Empfänger E2, die beide bei derselben Betriebswellenlänge von 790 nm arbeiten. An den Sender S1 und an den Empfänger E2 ist jeweils ein Lichtwellenleiterstück angekoppelt, die von derselben Art wie die Lichtwellenleiterstücke 2 in Figur 1 sind. An diese Lichtwellenleiterstücke ist ein Faser-Schmelzkoppler 8 angeschlossen, dessen Grenzwellenlänge so gewählt ist, daß er bei der Betriebswellenlänge von 790 nm "monomodig" ist. Das dritte Ende des Schmelzkopplers 8 ist wieder mit einem Lichtwellenleiterstück derselben Art wie das Lichtwellenleiterstück 2 in Fig. 1 durch Schmelz-Spleißverbindung verbunden, welches eine Steckverbindung 4 enthält und andererseits durch Schmelz-Spleißverbindung an den Lichtwellenleiter 1 angespleißt ist. In anderen Worten: Figur 2 unterscheidet sich von Figur 1 dadurch, daß in das Lichtwellenleiterstück 2 zwischen den optischen Sender und die optische Steckverbindung 4 ein Faser-Schmelzkoppler 8 eingespleißt und an diesen ein Empfänger E2 angespleißt ist.

In entsprechender Weise enthält die im rechten Teil der Figur 2 dargestellte Sende-Empfangs-Einrichtung, die sich in einem Gehäuse 11 befindet, einen optischen Sender S2, einen optischen Empfänger E1 mit derselben Betriebswellenlänge von 790 nm wie die auf der Gegenseite befindlichen Einheiten S1 und E2 und einen Faser-Schmelzkoppler 9, die entsprechend miteinander und mit dem Lichtwellenleiter 1 verbunden sind, wie dies für die Sende-Empfangseinrichtung 10 bereits erläutert wurde.

Dieses System kann nun beispielsweise wie folgt für eine bidirektionale Nachrichtenübertragung verwendet werden: In der einen Übertragungsrichtung, in der Figur 2 von links nach rechts, wird ein auf einen Träger, dessen Frequenz 20,7 MHz beträgt, moduliertes Breitband-Analogsignal oder auch ein Gemisch von mehreren modulierten HF-Trägern übertragen. Dieser modulierte Träger liegt am Eingang des optischen Senders S1 der Sende-Empfangseinrichtung 10 an. In der entfernten Sende-Empfangseinrichtung 11 erscheint dieses Analogsignal am Ausgang des optischen Empfängers E1 und durchläuft von dort einen Hochpaß 12.

In der entgegengesetzten Richtung wird ein auf einen Träger mit der Frequenz 0,225 MHz moduliertes analoges oder digitales Schmalband-Signal übertragen, wobei der modulierte Träger an den Eingang des optischen Senders S2 der Sende-Empfangseinrichtung 11 angelegt wird. In der entfernten Sende-Empfangseinrichtung 10 erscheint dieses Signal am Ausgang des optischen Empfängers E2 und durchläuft von dort einen Tiefpaß 13. In der Sende-Empfangseinrichtung 10 dient der Tiefpaß 13 dazu, das vom eigenen Sender S1 stammende Signal mit der Trägerfrequenz 20,7 MHz zu unterdrücken, und entsprechend dient der Hochpaß 12 in der Sende-Empfangseinrichtung 11 dazu, das vom eigenen Sender S2 stammende Signal mit der Trägerfrequenz 0,225 MHz zu unterdrücken.

Dieses bidirektionale Übertragungssystem nach Figur 2 ist beispielsweise dazu geeignet, von der Vermittlungsstelle bis zum Teilnehmer eines oder mehrere Breitband- und gegebenenfalls Schmalbandsignale im höheren Frequenzbereich zu übertragen und in der Gegenrichtung vom Teilnehmer zur Vermittlung eines oder mehrere digitale oder analoge Schmalbandsignale im niedrigeren Frequenzbereich zu übertragen.

Sämtliche Eigenschaften und Vorteile, die im Zusammenhang mit dem einseitig gerichteten Übertragungssystem nach Figur 1 erwähnt und erläutert wurden, gelten auch unverändert für das bidirektionale System nach Figur 2, insbesondere der Vorteil, daß hier in beiden Übertragungsrichtungen - die Forderung nach einem hohen Signal-Geräusch-Abstand erfüllbar und damit sogar eine Nachrichtenübertragung in Analogtechnik ermöglicht wird, d.h. daß konventionelle kostengünstige Übertragungseinrichtungen verwendbar sind.

Bei dem bisher beschriebenen Ausführungsbeispiel der Erfindung wird der Lichtwellenleiter 1 nur mit einer einzigen Wellenlänge betrieben, entweder für eine Übertragung in einer einzigen Richtung (Figur 1) oder für eine bidirektionale Übertragung (Figur 2). Selbstverständlich ist es auch möglich, den Lichtwellenleiter 1 im Wellenlängen-Multiplex auszunutzen, indem mittels am Anfang und am Ende des Lichtwellenleiters 1 in diesen eingefügten Wellenlängen-Multiplexer/Demultiplexern an jedem Ende eine zweite Sende-Empfangseinrichtung an den Lichtwellenleiter 1 angeschlossen wird, wobei diese zweiten Sende-Empfangseinrichtungen mit einer zweiten Betriebswellenlänge, z. B. 840 nm, arbeiten. Auch für diese Wellenlänge stehen kostengünstige Laser, die üblicherweise für Laserdrucker verwendet werden, zur Verfügung. Diese zweiten Sende-Empfangseinrichtungen sind abgesehen von ihrer Wellenlänge genau wie die in Figur 2 gezeigten Sende-Empfangseinrichtungen aufgebaut und bedürfen daher keiner näheren Erläuterung oder Darstellung in einer Zeichnung. Ein Anwendungsfall für ein solches System mit jeweils zwei Sende-Empfangseinrichtungen an jedem Ende des Übertragungs-Lichtwellenleiters 1 ist dann gegeben, wenn von einer Vermittlungsstelle zwei Teilnehmer über einen einzigen Lichtwellenleiter versorgt werden sollen und diese Teilnehmer auch Signale zur Vermittlungsstelle zu übertragen haben.

Ein weiteres Ausführungsbeispiel der Erfindung ist in Figur 3 gezeigt. Auch hier sind wie in Figur 2 optische Sende-Empfangseinrichtungen 16 und 17 an beiden Enden des Übertragungs-Lichtwellenleiters 1 vorhanden, von denen jede einen optischen Sender und einen optischen Empfänger enthält, so daß eine bidirektionale Nachrichtenübertragung möglich ist. In jeder der beiden Sende-Empfangseinrichtungen 16 und 17 hat der optische Sender eine andere Wellenlänge als der optische Empfänger, und die Faser-Schmelzkoppler 14 und 15 sind wellenlängenselektive Faser-Schmelzkoppler, die bei den beiden Betriebswellenlängen "monomodig" sind und die in der Lage sind, optische Signale mit den verschiedenen Wellenlängen voneinander zu trennen, so daß auf den Empfänger E2 in der Sende-Empfangseinrichtung 16 nur Licht der einen Wellenlänge, z.B. 840 nm, und auf den Empfänger E1 in der Sende-Empfangseinrichtung 17 nur Licht der anderen Wellenlänge, z.B. 790 nm auftrifft.

Anstelle der Faser-Schmelzkoppler 14 und 15 können auch andere wellenlängenselektive Koppler verwendet werden, z.B. Kanteninterferenzfilter oder Gitterkoppler, jeweils in Verbindung mit einem Monomode-Lichtwellenleiteranschlußstück.

Wegen der Trennung nach Wellenlängen können in den beiden Übertragungsrichtungen die gleichen Frequenzen zum Modulieren der optischen Sender verwendet werden, z.B. ein Träger mit der Frequenz 38,9 MHz und gegebenenfalls weitere Träger, z.B. ein Träger mit der Frequenz 20,7 MHz, falls Analogsignale übertragen werden sollen.

Selbstverständlich sind auch digitale Signale mit diesem System übertragbar, zum Beispiel ein Signal mit der Bitfolgefrequenz 280 Mbit/s von einer Vermittlungsstelle mit der Sende-Empfangseinrichtung 16 zu einem Teilnehmer mit der Sende-Empfangseinrichtung 17 und ein digitales Signal mit der Bitfolgefrequenz 140 Mbit/s in umgekehrter Richtung. Das System nach Figur 3 dient also zur Übertragung von analogen oder digitalen Signalen im Wellenlängen-Multiplex und in Frequenzgleichlage.

Wie bei den Systemen nach Figur 1 und 2 sind auch bei dem System nach Figur 3 die bei den Sendern und Empfängern notwendigen Übertragungseinrichtungen wie Modulatoren, Umsetzer usw. nicht dargestellt. Die übrigen Teile des Systems nach Figur 3 stimmen genau überein mit den in den Figuren 1 und 2 gezeigten entsprechend bezeichneten Teilen und bedürfen daher keiner eigenen Erläuterung mehr.

Ein weiteres Ausführungsbeispiel der Erfindung liegt dann vor, wenn man an jedes Ende des Übertragungs-Lichtwellenleiters 1 eine weitere Sende-Empfangseinrichtung ankoppelt. Diese weiteren Sende-Empfangseinrichtungen arbeiten wie die in Figur 3 gezeigten Sende-Empfangseinrichtungen 16 und 17, jedoch mit einem anderen Paar von Wellenlängen, z.B. mit dem Wellenlängenpaar 1180 nm und 1220 nm. Die zwei Sende-Empfangseinrichtungen an jedem Ende des Übertragungs-Lichtwellenleiters werden dann mittels sogenannter bidirektionaler optischer Multiplexer-Demultiplexer an den Lichtwellenleiter 1 angekoppelt, wobei auch hier das Prinzip der Erfindung beibehalten ist, daß die im System notwendigen Steckverbindungen in die bei den Betriebswellenlängen "monomodigen" Lichtwellenleiterstücke eingefügt sind.

Im vorliegenden Falle ist das aus jeder der beiden Sende-Empfangseinrichtungen herausragende Lichtwellenleiterstück nicht wie bei den Figuren 1 bis 3 direkt an den Übertragungs-Lichtwellenleiter 1 angespleißt, sondern an zwei Enden eines Faser-Schmelzkopplers, dessen drittes Ende an den Übertragungs-Lichtwellenleiter 1 angespleißt ist. Dieser Faser-Schmelzkoppler bildet den bidirektionalen Wellenlängen-Multiplexer/-Demultiplexer und ist wie der Übertragungs-Lichtwellenleiter erst deutlich oberhalb der Betriebswellenlängen "monomodig". Entsprechendes gilt für den Anschluß der beiden Sende-Empfangseinrichtungen am anderen Ende des Übertragungs-Lichtwellenleiters 1.

Auch für die Nachrichtenübertragung in beiden Richtungen mit Hilfe des zweiten Wellenlängenpaares gelten die Vorteile der Erfindung, die bereits im Zusammenhang mit den vorstehend beschriebenen Ausführungsbeispielen erläutert worden sind. Ein Anwendungsfall ist wie in einem vergleichbaren oben angeführten Beispiel dann gegeben, wenn an eine Vermittlungsstelle aus nicht nur ein, sondern zwei Teilnehmer über einen einzigen Lichtwellenleiter zum Zwecke einer für jeden Teilnehmer bidirektionalen Nachrichtenübertragung angeschlossen werden sollen.

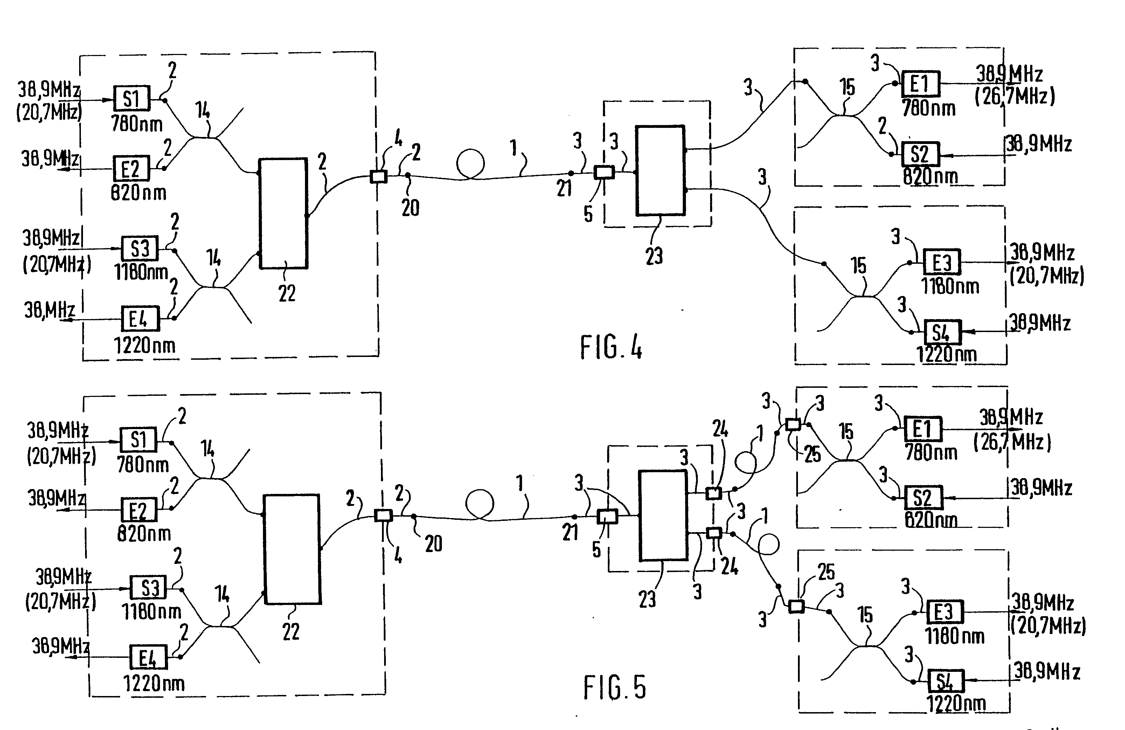

Anhand der Figuren 4 und 5 werden schließlich noch weitere Ausführungsbeispiele der Erfindung erläutert, bei denen, vergleichbar mit dem vorstehend erwähnten Ausführungsbeispiel, über den Lichtwellenleiter 1 nicht nur eine bidirektionale Nachrichtenverbindung sondern zwei bidirektionale Nachrichtenverbindungen bestehen. Vom System nach Figur 3 unterscheidet sich das nach Figur 4 wie folgt:

Zwischen den Faserschmelzkoppler 14 und die optische Steckverbindung 4 ist ein bidirektionaler optischer Wellenlängenmultiplexer/-demultiplexer 22 eingespleißt. Über diesen ist eine zweite optische Sende-Empfangseinrichtung, bestehend aus einem Sender S3 und einem Empfänger E4, angekoppelt, die mit einem anderen Wellenlängenpaar als die aus dem Sender S1 und dem Empfänger E2 bestehende erste optische Sende-Empfangseinrichtung arbeitet. Im gezeigten Beispiel hat die erste Sende-Empfangseinrichtung die Betriebswellenlängen 780 nm und 820 nm und die zweite optische Sende-Empfangseinrichtung die Betriebswellenlängen 1180 nm und 1220 nm. Abgesehen davon, daß die beiden Sende-Empfangseinrichtungen mit unterschiedlichen Wellenlängenpaaren arbeiten, gibt es keine Unterschiede.

Der bidirektionale optische Wellenlängenmultiplexer/-demultiplexer 22 sorgt dafür, daß die beiden Wellenlängenpaare nicht auf die jeweils andere Sende-Empfangseinrichtung gelangen können, jedoch zum beiden gemeinsamen Lichtwellenleiter 1.

Auf der gegenüberliegenden Seite unterscheidet sich das System nach Figur 4 von dem nach Figur 3 dadurch, daß zwischen die Steckverbindung 5 und den Faserschmelzkoppler 15 ein bidirektionaler optischer Wellenlängenmultiplexer/-demultiplexer 23 eingespleißt ist. Mit Hilfe dieses bidirektionalen Wellenlängenmultiplexers/-demultiplexers ist auch auf dieser Seite des Lichtwellenleiters 1 eine zweite optische Sende-Empfangseinrichtung, bestehend aus einem optischen Sender S4 und einem optischen Empfänger E3, angeschlossen, die mit dem Wellenlängenpaar 1180 nm und 1220 nm arbeiten. Diese beiden Sende-Empfangseinrichtungen sind über Lichtwellenleiterstücke 3 derselben Art wie die oben erwähnten Lichtwellenleiterstücke mit der Einrichtung 23 verbunden.

Über den Lichtwellenleiter 1 besteht somit nicht nur eine bidirektionale Verbindung (bei einem ersten Paar von Wellenlängen), sondern eine zweite ebenfalls bidirektionale Nachrichtenverbindung (bei einem zweiten Wellenlängenpaar).

Auch bei diesem Ausführungsbeispiel der Erfindung sind die optischen Steckverbindungen und sämtliche Wellenlängenmultiplexeinrichtungen innerhalb der Lichtwellenleiterstücke 2 bzw. 3 angeordnet, so daß dieselben oben erläuterten Vorteile gelten.

Das System nach Figur 5 unterscheidet sich von dem nach Figur 4 dadurch, daß zwischen dem bidirektionalen optischen Wellenlängenmultiplexer/-demultiplexer 23 und den beiden Faserschmelzkopplern 15 jeweils eine etwas aufwendigere Verbindung als bei Figur 4 besteht. Diese Verbindung besteht, vom Koppler 15 aus betrachtet, aus einem an das Ende des Kopplers 15 angespleißten Lichtwellenleiterstück 3, einem an dieses angespleißten Lichtwellenleiter 1 und einem zwischen diesen und den bidirektionalen optischen Wellenlängenmultiplexer/-demultiplexer 23 eingespleißten Lichtwellenleiterstück 3, wobei die Lichtwellenleiterstücke 3 optische Steckverbindungen 24 und 25 enthalten, die, ähnlich wie in Figur 1 erläutert, in Gehäusewänden befestigt sind. Die Lichtwellenleiterstücke 3 sind wiederum wie in allen bisher erläuterten Beispielen bei den Betriebswellenlängen monomodige Lichtwellenleiter, wogegen der Lichtwellenleiter 1 der für eine Übertragung im 1300 nm-Bereich optimierte Monomode-Lichtwellenleiter ist, der aber erst deutlich oberhalb der Betriebswellenlängen "monomodig" ist.

Beide Ausführungsbeispiele, Figur 4 und Figur 5, sind dazu geeignet, an eine Vermittlungsstelle, in den Figuren auf der linken Seite befindlich, mehrere Teilnehmer anzuschließen, wobei zwischen Vermittlung und jedem der Teilnehmer jeweils eine bidirektionale Nachrichtenübertragung stattfinden soll. Bei Figur 5 ist die den Teilnehmern zugeordnete Einrichtung 23 weiter entfernt von den Teilnehmern lokalisiert als bei Figur 4, weshalb zwischen dieser Einrichtung und den Teilnehmern aufwendigere, nicht nur Lichtwellenleiterstücke enthaltende Verbindungen, vorzusehen sind.

Im Unterschied zu dem eingangs genannten, bekannten System sind die zur Mehrfachausnutzung der Übertragungsstrecke vorgesehenen Einrichtungen nicht innerhalb des unterhalb seiner Grenzwellenlänge betriebenen Lichtwellenleiters 1, sondern innerhalb von oberhalb ihrer Grenzwellenlänge betriebenen Lichtwellenleiterstücken angeordnet.

## Ansprüche

1. Optisches Nachrichtenübertragungssystem mit mindestens einem optischen Sender (S) und mindestens einem optischen Empfänger (E) und einem Lichtwellenleiter (1), in dem oberhalb einer Grenzwellenlänge nur der Grundmodus ausbreitungsfähig ist, wobei die Betriebswellenlänge unterhalb der Grenzwellenlänge des Lichtwellenleiters (1) liegt und das oder die optischen Signale nur im Grundmodus übertragen werden, wobei im Verlauf der Übertragungsstrecke in der Nähe des optischen Senders (S) und in der Nähe des optischen Empfängers (E) als Modenfilter zur Unterdrückung der höheren Moden Lichtwellenleiterstücke vorhanden sind, die bei der Betriebswellenlänge Monomode-Lichtwellenleiter sind, wobei das senderseitige Lichtwellenleiterstück einerseits an den optischen Sender (S) angekoppelt ist, **dadurch gekennzeichnet,** daß das senderseitige Lichtwellenleiterstück (2) andererseits durch eine Schmelz-Spleißverbindung (20) mit dem Lichtwellenleiter (1) verbunden ist, daß das empfängerseitige Lichtwellenleiterstück (3) einerseits direkt an den optischen Empfänger angekoppelt und andererseits durch eine Schmelz-Spleißverbindung (21) mit dem Lichtwellenleiter (1) verbunden ist und daß sämtliche im System vorhandenen Steckverbindungen im Verlauf der Lichtwellenleiterstücke (2, 3) oder im Verlauf anderer Lichtwellenleiterstücke derselben Art, die in den Lichtwellenleiter (1) eingespleißt sind, angeordnet sind.

2. System nach Anspruch 1, dadurch gekennzeichnet, daß der optische Sender (S) ein mehrere longitudinale Moden abstrahlender Halbleiterlaser ist.

3. Sendeeinrichtung für ein optisches Nachrichtenübertragungssystem, bei dem ein optisches Signal im Lichtwellenleiter-Grundmodus bei einer Betriebswellenlänge über einen Monomode-Lichtwellenleiter übertragen wird, die unterhalb der Grenzwellenlänge des Lichtwellenleiters liegt, mit einem optischen Sender (S), an den ein Lichtwellenleiterstück (2) angekoppelt ist, das bei der Betriebswellenlänge ein Monomode-Lichtwellenleiter ist, **dadurch gekennzeichnet,** daß in dieses Lichtwellenleiterstück (2) eine optische Steckverbindung (4) eingefügt und sein freies Ende zum Anspleißen an den Lichtwellenleiter (1) durch eine Schmelz-Spleißverbindung (20) vorgesehen ist.

4. Sendeeinrichtung nach Anspruch 3, dadurch gekennzeichnet, daß sie Mittel enthält, die analoge schmalbandige und/oder breitbandige elektrische Signale auf HF-Träger aufmodulieren und den modulierten HF-Träger oder ein Gemisch aus den modulierten HF-Trägern als Steuersignal an den optischen Sender (S) anlegen.

5. Empfangseinrichtung für ein optisches Nachrichtenübertragungssystem, bei dem ein optisches Signal im Lichtwellenleiter-Grundmodus bei einer Betriebswellenlänge über einen Monomode-Lichtwellenleiter übertragen wird, die unterhalb der Grenzwellenlänge des Lichtwellenleiters liegt, mit einem optischen Empfänger (E), bei dem ein Lichtwellenleiterstück (3) vorhanden ist, das bei der Betriebswellenlänge ein Monomode-Lichtwellenleiter ist, **dadurch gekennzeichnet,** daß in dieses Lichtwellenleiterstück (3) eine optische Steckverbindung (5) eingefügt ist und daß das eine Ende an den optischen Empfänger angekoppelt und sein anderes, freies Ende zum Anspleißen an den Lichtwellenleiter (1) durch eine Schmelz-Spleißverbindung (21) vorgesehen ist.

6. Empfangseinrichtung nach Anspruch 5, dadurch gekennzeichnet, daß sie Mittel enthält, die ein vom optischen Empfänger (E) abgegebenes elektrisches Signalgemisch in einzelne modulierte HF-Träger trennen und diese demodulieren.

7. System nach Anspruch 1 oder 2, dadurch gekennzeichnet, daß in die Lichtwellenleiterstücke (2, 3) Faserschmelzkoppler (8, 9) eingespleißt sind und über diese zusätzlich zum optischen Sender (S1) ein optischer Empfänger (E2) und zusätzlich zum optischen Empfänger (E1) ein optischer Sender (S2) so an den Lichtwellenleiter (1) angekoppelt sind, daß in den beiden Übertragungsrichtungen Signale übertragbar sind, daß sämtliche optischen Sender (S1, S2) und Empfänger (E1, E2) dieselbe Betriebswellenlänge haben und daß bei den Sendern und Empfängern Mittel (12, 13) vorhanden sind, um die in den beiden Richtungen zu übertragenden Signale in Frequenzgetrenntlage zu übertragen (Fig. 2).

8. Sendeeinrichtung nach Anspruch 3 oder 4, dadurch gekennzeichnet, daß sie durch einen in das Lichtwellenleiterstück (2) eingespleißten Faserschmelzkoppler (8) und einen über diesen an das Lichtwellenleiterstück (2) gekoppelten optischen Empfänger (E2) zum Empfang von Signalen von einem entfernten optischen Sender (S2) zu einer Sende-Empfangseinrichtung (10) erweitert ist, daß der optische Empfänger (E2) dieselbe Betriebswellenlänge wie der optische Sender (S1) der Sende-Empfangseinrichtung (10) hat und daß die Sende-Empfangseinrichtung (10) Mittel (13) enthält, um eine Signalübertragung in den beiden Übertragungsrichtungen in Frequenzgetrenntlage durchzuführen (Fig. 2).

9. Empfangseinrichtung nach Anspruch 5 oder 6, dadurch gekennzeichnet, daß sie durch einen in das Lichtwellenleiterstück (3) eingespleißten Faserschmelzkoppler (9) und einen über diesen an das Lichtwellenleiterstück (3) gekoppelten optischen Sender (S2) zum Senden von Signalen zu einer entfernten Empfangseinrichtung (E2) zu einer Sende-Empfangseinrichtung (11) erweitert ist, daß der optische Sender (S2) dieselbe Betriebswellenlänge wie der optische Empfänger (E1) der Sende-Empfangseinrichtung (11) hat und daß die Sende-Empfangseinrichtung (11) Mittel (12) enthält, um eine Signalübertragung in den beiden Übertragungsrichtungen in Frequenzgetrenntlage durchzuführen (Fig. 2).

10. System nach Anspruch 1 oder 2, dadurch gekennzeichnet,
daß in die Lichtwellenleiterstücke (2, 3) Koppler (14, 15) eingespleißt sind und über diese zusätzlich zum optischen Sender (S1) ein optischer Empfänger (E2) und zusätzlich zum optischen Empfänger (E1) ein optischer Sender (S2) so an den Lichtwellenleiter (1) angekoppelt sind, daß in den beiden Übertragungseinrichtungen Signale übertragbar sind, daß das eine Sender-Empfänger-Paar (S1, E1) eine andere Betriebswellenlänge als das andere Sender-Empfänger-Paar (S2, E2) hat und daß die Koppler derart wellenlangenselektiv sind, daß die in den beiden Richtungen zu übertragenden Signale im Wellenlängenmultiplex übertragbar sind (Fig. 3).

11. Sendeeinrichtung nach Anspruch 3 oder 4, dadurch gekennzeichnet,
daß sie durch einen in das Lichtwellenleiterstück (2) eingespleißten Koppler (14) und einen über diesen an das Lichtwellenleiterstück (2) gekoppelten optischen Empfänger (E2) zum Empfang von Signalen von einem entfernten optischen Sender (S2) zu einer Sende-Empfangseinrichtung (16) erweitert ist, daß der optische Empfänger (E2) eine andere Betriebswellenlänge als der optische Sender (S1) der Sende-Empfangseinrichtung (16) hat und daß der Koppler (14) derart wellenlängenselektiv ist, daß die in den beiden Übertragungsrichtungen zu übertragenden Signale im Wellenlängenmultiplex übertragbar sind (Fig. 3).

12. Empfangseinrichtung nach Anspruch 5 oder 6, dadurch gekennzeichnet,
daß sie durch einen in das Lichtwellenleiterstück (3) eingespleißten Faserschmelzkoppler (15) und einen über diesen an das Lichtwellenleiterstück (3) gekoppelten optischen Sender (S2) zum Senden von Signalen zu einer entfernten Empfangseinrichtung zu einer Sende-Empfangseinrichtung (17) erweitert ist, daß der optische Sender (S2) eine andere Betriebswellenlänge als der optische Empfänger (E1) der Sende-Empfangseinrichtung (17) hat und daß der Faserschmelzkoppler (15) derart wellenlängenselektiv ist, daß die in den beiden Übertragungsrichtungen zu übertragenden Signale im Wellenlängenmultiplex übertragbar sind (Fig. 3).

13. System nach Anspruch 10, dadurch gekennzeichnet, daß in die Lichtwellenleiterstücke (2, 3) bidirektionale optische Wellenlängenmultiplexer/-demultiplexer (22, 23) eingefügt sind und über diese weitere optische Sender (S3, S4) und weitere optische Empfänger (E3, E4) derart angeschlossen und derart ausgelegt sind, daß durch Wellenlängenmultiplexbetrieb mehrere jeweils bidirektionale Verbindungen über den Lichtwellenleiter bestehen.

~790 nm    2    1300 nm-Monomode-LWL    3    ~790 nm

S    1    E

4    20    21    5    7

6

Monomode–LWL
$\lambda_c = 640\,nm$

Monomode – LWL
$\lambda_c = 640\,nm$

FIG.1

20,7 MHz    S1   790nm    8    2    2   1    3    7    S2   790nm    0,225 MHz

13    2    4    20    21    5    9    12    20,7 MHz

0,225 MHz    E2   790nm    2    E1   790nm

10    11

FIG.2

38,9 MHz (20,7 MHz)    S1   790nm    14    2    2   1    3    15    2    S2   840nm    38,9 MHz

2    4    20    21    5

38,9 MHz    E2   340nm    2    E1   790nm    38,9 MHz (20,7 MHz)

16    17

FIG.3

K. Fußgänger 7-1
23. 6. 88

EP 0 349 766 A2

FIG. 4

38,9MHz
(20,7MHz)
S1
780nm

38,9MHz
E2
820nm

38,9MHz
(20,7MHz)
S3
1180nm

38,MHz
E4
1220nm

14 2 2 2 22 20 4 2 1 21 5 3 3 23

38,9MHz
(26,7MHz)
E1
780nm

38,9MHz
S2
820nm

38,9MHz
(20,7MHz)
E3
1180nm

38,9MHz
S4
1220nm

15 3

FIG. 5

38,9MHz
(20,7MHz)
S1
780nm

38,9MHz
E2
820nm

38,9MHz
(20,7MHz)
S3
1180nm

38,9MHz
E4
1220nm

14 2 2 2 22 20 4 2 1 21 5 23 3 24 25 1

38,9MHz
(26,7MHz)
E1
780nm

38,9MHz
S2
820nm

38,9MHz
(20,7MHz)
E3
1180nm

38,9MHz
S4
1220nm

15 3

k. Fußgänger 7-1